# EUROPEAN PATENT APPLICATION

(11) **EP 4 375 235 A2**
(43) Date of publication of application: **29.05.2024**
(21) Application number: 23190823.7
(22) Date of filing: 10.08.2023
(51) Int. Cl.: C01B 3/38, C01B 3/48, C01B 3/50, C01B 3/56, C01B 3/58

(54) **INTEGRATION OF HYDROGEN FUELED GAS TURBINE WITH A HYDROCARBON REFORMING PROCESS**

(30) Priority: 10.08.2022 US 202263371009 P
(71) Applicant: Tallgrass MLP Operations, LLC, Leawood KS 66211 (US)
(72) Inventor: Follaca, Vincent, Texas, 77007 (US); Nelson, Alison Renee, Texas, 77018 (US); Phillips, Dwayne Holly, Texas, 77386 (US); Daniels, Damon, Texas, 77005 (US)
(74) Representative: Boult Wade Tennant LLP

(57) **Abstract**

Processes for producing hydrogen from a source gas comprising natural gas are described. A process comprises catalytic reaction of a source gas to produce a product stream. The product stream may then be subjected to a number of conversion and/or purification steps to produce a hydrogen product. The hydrogen product may be recycled to the catalytic reactor or a gas turbine as a source of fuel and/or heat to the catalytic reaction.

## Description

### FIELD

The present disclosure generally relates to a process for producing hydrogen from a source gas comprising a hydrocarbon, wherein the process comprises steam methane reforming (SMR) or auto-thermal reforming (ATR) in combination with a hydrogen-fueled combustion gas turbine. The hydrogen product stream of the SMR or ATR reaction may be recycled to the gas turbine to reduce energy consumption and greenhouse gas emissions.

### BACKGROUND

As of 2020, approximately 80% of the hydrogen produced in the US was produced from natural gas reforming. Natural gas reforming is a process in which natural gas catalytically reacts with steam to produce a synthesis gas (e.g., comprising H₂, CO, and/or CO₂). The hydrogen is then extracted from the synthesis gas (referred to herein as "syngas") through a series of conversion and/or purification steps.

Typical technologies for natural gas reforming are steam methane reforming (SMR) and auto-thermal reforming (ATR). However, SMR and ATR technologies generally require the combustion of natural gas or other greenhouse gas emitting fuels to provide heat to the catalytic reaction. Frequently, the source of fuel and/or heat to the reforming process originates from an external source. In an SMR process for producing hydrogen, approximately 60% of the total CO₂ emissions originate from conversion of the natural gas to syngas in the steam methane reformer and the remainder of the CO₂ emissions originate from the combustion of natural gas or other greenhouse gas emitting fuels to provide heat to the process.

Accordingly, there remains a need in the art to develop processes wherein hydrogen can be effectively prepared (e.g., from natural gas) and the total greenhouse gas emissions (e.g., CO₂) of the hydrogen preparation process are reduced. There also remains a need in the art to develop processes wherein the fuel and/or heat provided to the process does not solely originate from greenhouse gas emitting sources, thereby further reducing the emissions.

### BRIEF SUMMARY

One aspect of the present disclosure is directed to a process for producing hydrogen. In certain aspects, the hydrogen may be used to produce further products (e.g., ammonia, methanol, etc.). The process for producing hydrogen comprises introducing heat and a source gas comprising natural gas into a steam methane reformer to produce a reformer product stream comprising, *inter alia,* hydrogen and carbon monoxide. The reformer product stream is subjected to a water-gas shift reaction to produce a water-gas shift product stream; the water-gas shift reaction comprising reacting the carbon monoxide with water to produce carbon dioxide and hydrogen. Carbon dioxide is then removed from the water-gas shift product stream to produce a CO₂-depleted hydrogen stream. Finally, the CO₂-depleted hydrogen stream is subjected to either (i) a pressure-swing adsorption process to adsorb at least a portion of the undesirable components and produce a relatively pure hydrogen product stream (e.g. >99.99% hydrogen), or (ii) a methanation process to convert the residual CO and CO₂ into methane and produce a less pure hydrogen product stream (e.g., about 95% hydrogen). In some instances, the CO₂-depleted hydrogen stream is not processed under either (i) or (ii) and is used directly as the hydrogen product stream. At least a portion of the hydrogen product stream is then directed to a hydrogen-fueled gas turbine as a source of fuel and the hydrogen-fueled gas turbine produces at least a portion of the heat introduced into the steam methane reformer.

Another aspect of the present disclosure is directed to a process for producing hydrogen comprising providing a diluent to a hydrogen-fueled gas turbine. The process comprises introducing heat and a source gas comprising natural gas into a steam methane reformer to produce a reformer product stream comprising, *inter alia,* hydrogen and carbon monoxide. The reformer product stream is subjected to a water-gas shift reaction to produce a water-gas shift product stream; the water-gas shift reaction comprising reacting the carbon monoxide with water to produce carbon dioxide and hydrogen. Carbon dioxide is then removed from the water-gas shift product stream to produce a CO₂-depleted hydrogen stream. Finally, the CO₂-depleted stream is subjected to (i) a pressure-swing adsorption process to produce a relatively pure hydrogen product stream (i.e. >99.99% hydrogen), (ii) a methanation process to produce a less pure hydrogen product stream (e.g., about 95% hydrogen), or (iii) is not otherwise processed and is used directly as the hydrogen product stream. At least a portion of the hydrogen product stream is then directed to a hydrogen-fueled gas turbine as a source of fuel and the hydrogen-fueled gas turbine produces at least a portion of the heat introduced into the steam methane reformer. The reformer product stream is cooled, producing steam. At least a portion of this steam is directed to the hydrogen-fueled gas turbine as a diluent.

Further aspects of the present disclosure are directed to a process for producing hydrogen comprising autothermal reforming. In certain aspects, the hydrogen may be used to produce further products (e.g., ammonia, methanol, etc.). The process comprises heating a source gas comprising natural gas in a pre-heater and combusting the heated source gas with, a source of oxygen in presence of steam in an autothermal reformer to produce a reformer product stream comprising hydrogen, carbon monoxide, and carbon dioxide. At least a portion of the steam is generated from heat recovered from the reformer product stream. In certain aspects of the present disclosure, steam may further be generated by heat recovered from other parts of the process (e.g., the feed pre-heater). The reformer product stream is subjected to a water-gas shift reaction to produce a water-gas shift product stream; the water-gas shift reaction comprising reacting the carbon monoxide with water to produce carbon dioxide and hydrogen. Carbon dioxide is removed from the water-gas shift product stream to produce a CO₂-depleted hydrogen stream. Finally, the CO₂-depleted stream is subjected to (i) a pressure-swing adsorption process to produce a relatively pure hydrogen product stream (i.e. >99.99% hydrogen), (ii) a methanation process to produce a less pure hydrogen product stream (e.g., about 95% hydrogen), or (iii) is not otherwise processed and is used directly as the hydrogen product stream. At least a portion of the hydrogen product stream is then directed to a hydrogen-fueled gas turbine as a source of fuel and the hydrogen-fueled gas turbine produces exhaust gas that is used to heat the source gas comprising natural gas in the pre-heater.

Other objects and features will be in part apparent and in part pointed out hereinafter.

### BRIEF DESCRIPTION OF THE FIGURES

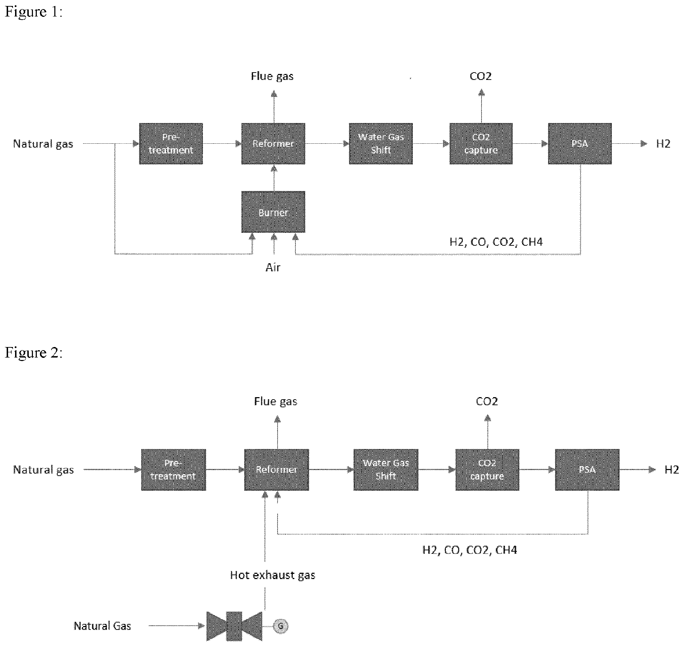

Figure 1 illustrates a traditional flow diagram of an SMR process for producing hydrogen comprising a catalytic reforming reaction, water-gas shift reaction, CO₂ capture, and PSA process.
Figure 2 illustrates a flow diagram of an SMR process for producing hydrogen comprising a catalytic reforming reaction, water-gas shift reaction, CO₂ capture, and PSA process, wherein a gas turbine is supplied with natural gas and the resulting exhaust gases are directed to the catalytic reforming reaction as a source of heat.

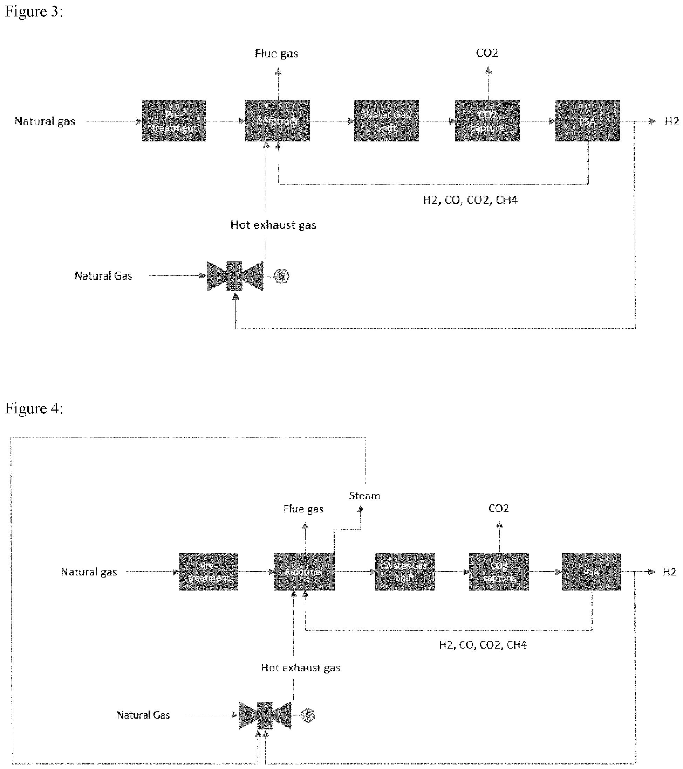

Figure 3 illustrates an example flow diagram of an SMR process of the present disclosure for producing hydrogen. The process comprises a catalytic reforming reaction, water-gas shift reaction, CO₂ capture, and PSA process, wherein a gas turbine is supplied with a slip stream of the hydrogen product and the resulting exhaust gases are directed to the catalytic reforming reaction as a source of heat.
Figure 4 illustrates a flow diagram of an SMR process of Figure 3, wherein exhaust steam from the catalytic reforming reaction is directed to the gas turbine as a diluent.

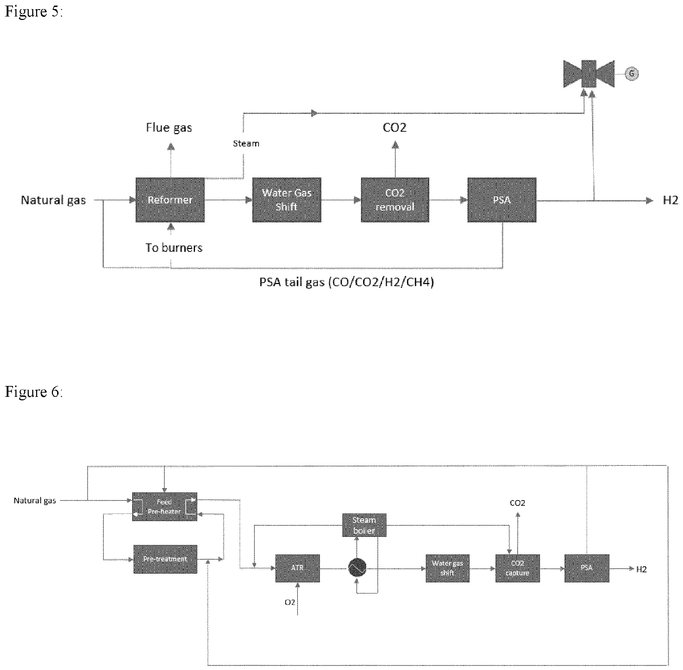

Figure 5 illustrates an example flow diagram of an SMR process of the present disclosure for producing hydrogen. The process comprises a catalytic reforming reaction, water-gas shift reaction, CO₂ capture, and PSA process, wherein a gas turbine is supplied with a slip stream of the hydrogen product and the exhaust steam of the catalytic reforming reaction.
Figure 6 illustrates a traditional flow diagram of an ATR process for producing hydrogen from natural gas comprising pre-heating, pre-treatment, auto-thermal reforming, steam generation, a water-gas shift reaction, CO₂ capture, and PSA.

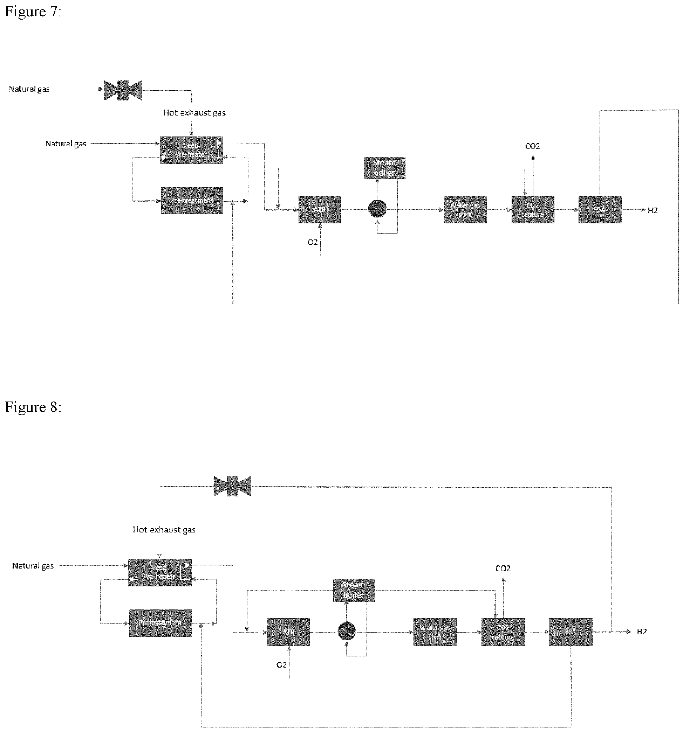

Figure 7 illustrates a flow diagram of an ATR process for producing hydrogen from natural gas comprising pre-heating, pre-treatment, auto-thermal reforming, steam generation, a water-gas shift reaction, CO₂ capture, and PSA, wherein a separate natural gas stream is directed as a feed stream to a gas turbine and the hot exhaust gases of the gas turbine are directed to the feed pre-heater as a source of heat.
Figure 8 illustrates an example of a flow diagram of an ATR process of the present disclosure for producing hydrogen. The process comprises pre-heating, pre-treatment, auto-thermal reforming, steam generation, a water-gas shift reaction, CO₂ capture, and PSA, wherein a slip stream of the hydrogen product stream is directed as a feed stream to a gas turbine and the hot exhaust gases of the gas turbine are directed to the feed preheater as a source of heat.

Corresponding reference characters indicate corresponding parts throughout the drawings.

### DETAILED DESCRIPTION

The present disclosure is directed to processes for producing hydrogen from a hydrocarbon (e.g., natural gas) wherein the total greenhouse gas emissions (e.g., CO₂) of the hydrogen preparation process are reduced as compared to traditional processes. In the processes of the present disclosure, heat may be provided to the process by the exhaust gas of a gas turbine utilizing a source fuel comprising hydrogen, wherein at least a portion of the hydrogen originates from the hydrogen product of the process described herein. Fully or partially utilizing hydrogen as fuel for a gas turbine results in reduced CO₂ emissions compared to configurations wherein the gas turbine is fed solely with natural gas or another hydrocarbon fuel source. The use of at least a portion of the hydrogen produced in the present process (i.e. on-site hydrogen) as a source of fuel for the gas turbine also reduces and/or eliminates the transportation and other costs associated with procuring external fuel for the gas turbine.

Combustion of hydrogen occurs at a higher temperature than, for example, the combustion of natural gas. Therefore, in order to utilize a fuel source comprising hydrogen in a turbine designed for natural gas consumption, it may be necessary to use a diluent to reduce the flame temperature and preserve the integrity of the turbine combustor. Additional cost savings may be realized in the process disclosed herein by utilizing steam produced during the hydrogen production process as a diluent for the gas turbine.

The processes of the present disclosure may also comprise further steps that reduce the overall greenhouse gas emissions of the process, such as a CO₂ capture step.

The present disclosure relates to processes for producing hydrogen comprising a steam methane reforming process. The process comprising introducing heat and a source gas comprising natural gas into a steam methane reformer to produce a reformer product stream comprising hydrogen and carbon monoxide. The reformer product stream is subjected to a water-gas shift reaction to produce a water-gas shift product stream; the water-gas shift reaction comprising reacting the carbon monoxide with water to produce carbon dioxide and hydrogen. Carbon dioxide is then removed from the water-gas shift product stream to produce a CO₂-depleted hydrogen stream. Finally, the CO₂-depleted hydrogen stream is subjected to (i) a pressure-swing adsorption process to produce a relatively pure hydrogen product stream (i.e. >99.99% hydrogen), (ii) a methanation process to produce a less pure hydrogen product stream (e.g., about 95% hydrogen), or (iii) is not otherwise processed and is used directly as the hydrogen product stream. At least a portion of the hydrogen product stream is directed to a hydrogen-fueled gas turbine as a source of fuel and the hydrogen-fueled gas turbine produces at least a portion of the heat introduced into the steam methane reformer.

Processes of the present disclosure are also directed to processes for producing hydrogen comprising providing a diluent to a hydrogen-fueled gas turbine. The process comprises introducing heat and a source gas comprising natural gas into a steam methane reformer to produce a reformer product stream comprising hydrogen and carbon monoxide. The reformer product stream is subjected to a water-gas shift reaction to produce a water-gas shift product stream; the water-gas shift reaction comprising reacting the carbon monoxide with water to produce carbon dioxide and hydrogen. Carbon dioxide is then removed from the water-gas shift product stream to produce a CO₂-depleted hydrogen stream. Finally, the CO₂-depleted hydrogen stream is subjected to a (i) pressure-swing adsorption process to adsorb at least a portion of the undesirable components and produce a pure hydrogen product stream; (ii) a methanation process to convert the residual CO and CO₂ into methane and produce a hydrogen stream or (iii) the CO₂ depleted hydrogen stream is not otherwise processed and is used directly as the hydrogen product stream. At least a portion of the hydrogen product stream is directed to a hydrogen-fueled gas turbine as a source of fuel. The reformer product stream is cooled, producing steam. At least a portion of the steam is directed to the hydrogen-fueled gas turbine as a diluent.

The present disclosure is further directed to processes for producing hydrogen comprising autothermal reforming. The process comprises heating a source gas comprising natural gas in a pre-heater and contacting the heated source gas, a source of steam, and a source of oxygen in an autothermal reformer to produce a reformer product stream comprising hydrogen and carbon monoxide. Steam is generated from the latent heat of the reformer product stream, wherein at least a portion of the source of steam introduced in the autothermal reformer comprises steam generated from the latent heat of the reformer product stream. The reformer product stream is subjected to a water-gas shift reaction to produce a water-gas shift product stream; the water-gas shift reaction comprising reacting the carbon monoxide with water to produce carbon dioxide and hydrogen. Carbon dioxide is removed from the water-gas shift product stream to produce a CO₂-depleted hydrogen stream. Finally, the CO₂-depleted hydrogen stream is subjected to a (i) pressure-swing adsorption process to adsorb at least a portion of the undesirable components and produce a pure hydrogen product stream; (ii) a methanation process to convert the residual CO and CO₂ into methane and produce a hydrogen stream or (iii) the CO₂ depleted hydrogen stream is not otherwise processed and is used directly as the hydrogen product stream. At least a portion of the hydrogen product stream is directed to a hydrogen-fueled gas turbine as a source of fuel and the hydrogen-fueled gas turbine produces exhaust gas that is used to heat the source gas comprising natural gas in the pre-heater.

Hydrogen may be produced through the catalytic conversion of a hydrocarbon such as natural gas by using reforming technologies. For example, steam methane reforming (SMR) or auto-thermal reforming (ATR). Although reference is made herein to improvements and/or design changes to SMR and ATR processes, it should be understood that the improvements and designs described herein are equally applicable to any hydrogen production process wherein the emissions/operating costs may be reduced by implementation of one or more of the described changes.

Prior to the reforming process, the feed stream may be subjected to a pre-treatment unit operation where sulfur compounds are removed and long hydrocarbons are pre-reformed. Pre-reforming entails steam reforming of a portion of the feed stream and methanation of the heavier hydrocarbons resulting from the pre-reforming operation. The feed stream may also be subjected to other pre-treatment unit operation as required for the efficiency and/or economic viability of the process.

### Steam Methane Reforming:

In an SMR reaction, a source gas comprising a hydrocarbon (e.g., natural gas) is fed to a reformer and catalytically converted in the presence of steam to produce a syngas (e.g., comprising a mixture of H₂, CO, CO₂, and CH₄). The catalytic reaction of the feed stream in the reformer requires high temperatures. This elevated temperature may be provided by the heat of combustion of a burner that is fed with air and natural gas or outlet gasses of downstream unit operations. The heat from the exhaust combustion gases of the burner are recovered in a heat recovery system to provide heat to the reaction and/or to produce steam for the reaction.

The catalyst used in the catalytic reaction of the feed stream may comprise one or more catalytic materials selected from the group consisting of nickel, zinc, copper and combinations thereof. For example, the catalyst may comprise zinc, copper, or combinations thereof. Preferably, the catalyst comprises nickel.

The hot syngas (i.e. reformer product stream) resulting from the reformer is optionally cooled in a first boiler to produce steam. The steam may be used as a source of heat for other unit operations on-site or otherwise recovered as necessary. The cooled syngas (i.e. reformer product stream) is then directed to one or more water-gas shift reactor(s) to form a water-gas shift product stream. In the shift reactor, steam is added to the cooled syngas to convert CO into CO₂ and H₂ and produce a water-gas shift product stream.

The water-gas shift reaction may comprise contacting the reformer product stream with a catalyst. Additionally, the gas shift reaction comprises cooling the reformer product stream prior to contact with the catalyst. The catalyst may comprise, for example, a base metal.

After the water-gas shift reaction, the water-gas shift product stream may be subjected to one or more CO₂ capture steps to produce a CO₂-depleted hydrogen stream. For example, CO₂ may be separated from the water-gas shift product stream by a process comprising absorption, adsorption, membrane separation, cryogenic separation, cryogenic distillation, or combinations thereof. For example, the water-gas shift product stream may be directed to an absorption unit operation to remove at least a portion of the CO₂ present in the stream.

The concentration of CO₂ in the CO₂-depleted hydrogen stream may be about 35 wt.% or less, about 30 wt.% or less, about 25 wt.% or less, about 20 wt.% or less, about 15 wt.% or less, about 10 wt.% or less, about 5 wt.% or less, about 4 wt.% or less, about 3 wt.% or less, about 2 wt.% or less, about 1 wt.% or less, about 0.5 wt.% or less, or about 0.25 wt.% or less. For example, from about 35 wt.% to about 0.25 wt.%, from about 30 wt.% to about 0.25 wt.%, from about 25 wt.% to about 0.25 wt.%, from about 20 wt.% to about 0.25 wt.%, from about 10 wt.% to about 0.25 wt.%, from about 5 wt.% to about 0.25 wt.%, from about 4 wt.% to about 0.25 wt.%, from about 3 wt.% to about 0.25 wt.%, from about 2 wt.% to about 0.25 wt.%, from about 1 wt.% to about 0.25 wt.%, or from about 0.5 wt.% to about 0.25 wt.%.

In certain aspects of the present disclosure, a final purification step may be conducted to remove impurities and reach the desired concentration of hydrogen in the hydrogen product stream. For example, this purification step may comprise a pressure-swing adsorption (PSA) process and/or a methanation process. A PSA process comprises adsorbing residual carbon dioxide and other undesirable components (e.g., impurities) using an adsorbent material at high pressures. A PSA process may produce a relatively pure hydrogen product stream comprising >99.99% hydrogen. Methanation is the purification process to remove the small amounts of CO₂ and CO in the syngas by reaction with hydrogen using methanation catalyst. A methanation process is typically able to produce hydrogen at a purity of about 95%. The resulting exit gas of this final purification step is a highly purified hydrogen gas (i.e. a hydrogen product stream). The adsorbed impurities may then be desorbed from the adsorbent material. The impurities removed in this purification step may be recycled to the burner and combusted. Alternatively, the impurities may be recycled to the reformer and converted in presence of steam.

The adsorbent material of the PSA process may comprise, for example, one or more zeolite.

The impurities or undesirable components adsorbed in the PSA process may be selected from the group consisting of carbon monoxide, carbon dioxide, methane, water, ammonia, and combinations thereof.

The methanation process may comprise contacting the CO₂-depleted hydrogen stream with a methanation catalyst. The methanation catalyst may comprise, for example, nickel.

In certain aspects, the CO₂-depleted hydrogen stream produced by the water-gas shift reaction may be used directly as the hydrogen product stream without a final purification step (e.g., without being subjected to a PSA or methanation process). For example, the hydrogen product stream resulting from no purification of the CO₂-depleted hydrogen stream may be mixed with nitrogen in a nitrogen wash unit, which is a precursor to downstream ammonia production.

The hydrogen product stream may be used as a fuel source for a hydrogen-fueled gas turbine or may be used as a source of hydrogen for further processes. For example, it can be mixed with nitrogen in a nitrogen wash unit, precursor to downstream ammonia production without any purification.

A flow diagram of an SMR process comprising a catalytic reforming reaction, water-gas shift reaction, CO₂ capture, and PSA process is shown in Figure 1. Figure 1 illustrates the recycle of impurities recovered in the PSA process to the reformer as a source of fuel for the reformer process and/or for further reforming. Figure 1 also shows a slip stream of the feed gas stream comprising natural gas being directed as fuel for a heater of the reformer process.

The process described above and illustrated in Figure 1 emits greenhouse gas pollution (e.g., CO₂) during both the catalytic conversion of natural gas and steam into syngas and the burner combustion to produce heat for the reforming unit operation. In some instances, 40% or more of the total CO₂ emissions of the process are attributable to the combustion in the burner. One way to reduce the greenhouse gas emissions of an SMR process is to reduce the combustion of natural gas or other greenhouse gas emitting fuels in the burner. The natural gas combustion can be limited by providing an external source of heat to complement or replace the heat from natural gas combustion, for example a hot exhaust gas from a gas turbine. In configurations utilizing a gas turbine, the exhaust gas of the gas turbine may be directly connected to the air inlet of the reformer as a source of heat, thereby reducing or eliminating the need to burn natural gas in a less efficient burner unit operation. A configuration comprising a natural gas turbine is shown in Figure 2. In Figure 2, a slip stream of the feed gas stream comprising natural gas is not sent to a burner to provide heat to the reformer. Instead, a separate source of natural gas is supplied to a gas turbine to produce energy as needed and results in hot exhaust gases that may be used a source of heat for the reformer. The use of a gas turbine that is fed natural gas as a fuel may reduce CO₂ emissions based on the improved efficiency of the turbine as compared to a traditional burner, however the process still produces significant CO₂ emissions.

A solution to the problems presented by these two configurations (e.g., Figures 1 and 2) is to utilize a gas turbine as described above, but to provide a fuel to the gas turbine that produces reduced emissions as compared to a natural gas fed gas turbine. Hydrogen is a desirable fuel for combustion due to its significantly reduced emission profile. When a purely hydrogen gas feed is combusted in a gas turbine, hydrogen will react with oxygen in the air to form only water as a byproduct, while simultaneously producing energy (i.e., heat).

The present disclosure is also directed to producing a hydrogen product stream from a source gas comprising natural gas utilizing an SMR process, wherein at least a portion of the hydrogen product stream is recycled to a gas turbine. Although the primary goal of the gas turbine is to produce electricity for use elsewhere in the plant or to be sold to the grid, the gas turbine hot exhaust gas can be utilized as a source of heat for the SMR process and contribute to further cost savings. As shown in Figure 3, a slip stream of the hydrogen product stream is directed to a hydrogen gas turbine. The hot exhaust gas (that is substantially free of CO₂) from the hydrogen gas turbine is directed to the reformer as a source of heat. In this way, a steam methane reforming process may be conducted to produce a hydrogen product while significantly reducing the emissions as compared to current SMR processes.

In this configuration, the heat required by the steam methane reforming process is supplied by the exhaust gas of a gas turbine that does not significantly contribute to pollution or the release of undesirable greenhouse gases such as CO₂. Further, since the hydrogen fuel is produced with low or zero-CO₂ emissions (for example with carbon dioxide capture and storage), the power produced by the gas turbine may be characterized as partially or entirely decarbonized. The power generated from this gas turbine may then be utilized in other unit operations of the SMR process or elsewhere on-site as a further cost savings. This configuration of the present disclosure provides a significant advantage over the prior known processes by producing hydrogen from natural gas while simultaneously reducing the emissions associated with typical reforming processes and generating partially or entirely decarbonized power.

Although reference is made in the figures to a PSA step following CO₂ capture, as discussed above, the process of the present disclosure may utilize a PSA and/or methanation process at this step. Further, in various configurations, the PSA and/or methanation process may be omitted entirely from the process flow diagram.

The fuel to the gas turbine may be a blend of natural gas and hydrogen from the hydrogen product stream, such that the process realizes reduced emissions and produces partially decarbonized power but still allows for the majority of the hydrogen produced by the process to be recovered as a product. It will be understood that the amount of hydrogen and natural gas used in the gas turbine may be varied based on economic and/or environmental considerations. A further consideration when selecting the blend of natural gas and hydrogen from the hydrogen product stream is the technical limitations of the turbine. For example, the ability of the gas turbine combustors to burn hydrogen, the ability of the various turbine component to tolerate different combustion temperatures, etc.

The feed to the gas turbine may comprise about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol.% or greater, about 99.999 vol.% or greater, or about 100 vol.% of hydrogen. For example, the feed to the gas turbine may comprise from about 10 vol.% to about 99 vol.%, from about 15 vol.% to about 99 vol.%, from about 20 vol.% to about 99 vol.%, from about 25 vol.% to about 99 vol.%, from about 30 vol.% to about 99 vol.%, from about 35 vol.% to about 99 vol.%, from about 40 vol.% to about 99 vol.%, from about 45 vol.% to about 99 vol.%, from about 50 vol.% to about 99 vol.%, from about 55 vol.% to about 95 vol.%, from about 60 vol.% to about 90 vol.%, from about 65 vol.% to about 85 vol.%, or from about 70 vol.% to about 80 vol.% of hydrogen. In certain configurations, the feed to the gas turbine may comprise from about 10 vol.% to about 100 vol.%, from about 20 vol.% to about 100 vol.%, from about 30 vol.% to about 100 vol.%, from about 40 vol.% to about 100 vol.%, from about 30 vol.% to about 100 vol.%, from about 35 vol.% to about 100 vol.%, from about 50 vol.% to about 100 vol.%, from about 60 vol.% to about 100 vol.%, from about 70 vol.% to about 100 vol.%, from about 80 vol.% to about 100 vol.%, from about 90 vol.% to about 100 vol.%, or from about 95 vol.% to about 100 vol.% of hydrogen.

The combustion of hydrogen generally produces a higher temperature than the combustion of natural gas. Therefore, hydrogen gas turbine combustor technology generally requires a diluent to be added to the hydrogen to reduce the temperature of the flame. The diluent for a hydrogen gas turbine may be selected, for example, from the group consisting of recirculated flue gas, nitrogen, and steam.

Conventional gas turbines are frequently built with a heat recovery steam generator, which recover the waste heat from the gas turbine to produce steam. This steam may be utilized to operate a steam turbine and contribute to the power output of the plant. It is possible to recover some of this steam as a slip stream to act as a diluent for the gas turbine. However, using this portion of steam reduces the total amount of steam sent to the steam turbine or reformer unit operation, ultimately decreasing power and/or hydrogen production in the plant. Therefore, as a further energy, cost, and/or emissions savings, the present disclosure is also directed to a process comprising integrating a hydrogen-fueled gas turbine with an SMR, wherein steam produced from the exhaust gas of the steam methane reformer is used in the hydrogen-fueled gas turbine as a diluent. In addition to not sacrificing power and/or hydrogen generation associated with the steam produced by the gas turbine, recycle of the exhaust steam from the steam methane reformer also allows for a "closed" cycle of steam from the gas turbine through the reformer. That is, steam removed from the reformer is directed to the gas turbine to maintain the required output from the turbine with a reduced energy cost. In addition, steam produced in any other location of the SMR process (e.g., steam produced from cooling the hot reformer product stream prior to the water-gas shift reaction) or elsewhere in the plant may be directed to the hydrogen-fueled gas turbine as a diluent. As shown in Figure 4, an exhaust steam stream from the reformer unit operation is recycled to the hydrogen gas turbine as a diluent.

In certain configurations, from about 1 vol% to about 100 vol%, from about 1 vol% to about 90 vol%, from about 1 vol% to about 80 vol%, from about 1 vol% to about 70 vol%, from about 1 vol% to about 60 vol%, from about 1 vol% to about 15000 vol%, from about 1 vol% to about 40 vol%, from about 1 vol% to about 30 vol%, from about 1 vol% to about 20 vol%, from about 1 vol% to about 15 vol%, from about 1 vol% to about 100 vol%, from about 2 vol% to about 15 vol%, from about 3 vol% to about 15 vol%, from about 4 vol% to about 15 vol%, or from about 5 vol% to about 15 vol% of the steam produced from the exhaust gas of the steam methane reformer is directed to the hydrogen-fueled gas turbine as a diluent.

Also, the hydrogen gas product stream and steam produced in the SMR process may be directed to a hydrogen-fueled gas turbine and the resulting power and heat may be directed to other operations on-site. In the configuration of Figure 5, the hydrogen product stream and the exhaust steam from the SMR process are directed to a gas turbine external to the SMR hydrogen production process. The energy generated by this gas turbine, and any resulting exhaust gas, may be used for other processes or unit operations present on-site.

In certain aspects, the hydrogen product stream may be used to produce further products (e.g., ammonia, methanol, etc.).

### Auto-Thermal Reforming:

In another process for producing hydrogen, an auto-thermal reforming (ATR) process is used in place of the SMR process. An ATR process similarly conducts a high temperature catalytic reforming reaction to convert a source gas comprising a hydrocarbon into a syngas. However, in an ATR process, the majority of the source of the heat for the reaction is not external to the reformer. Instead, a majority of the heat is produced by the combustion of natural gas and oxygen directly in the catalyst bed of the auto-thermal reformer.

In an ATR process, the system typically comprises a pre-heater and pre-treatment step upstream of the auto-thermal reformer. Natural gas is combusted in a preheater unit operation to generate heat and produce a heated natural gas stream. The heated natural gas stream is at a temperature lower than that of the temperature of the downstream auto-thermal reformer. The heated natural gas stream is then directed to a pre-treatment unit operation where at least a portion of the heated hydrocarbon feed stream is pre-reformed to form methane. The resulting stream is then directed to the auto-thermal reformer where it is combusted with oxygen in the presence of steam in a catalyst bed. The oxygen used in this process may be substantially pure. For example, about 95 wt% or greater, about 99 wt% or greater, about 99.5 wt% or greater, or about 99.9 wt% or greater. Since the auto-thermal reformer conducts a catalytic reaction of natural gas at high temperatures, a reforming reaction similar to that of the steam methane reforming reaction described above takes place. The auto-thermal reaction produces a hot syngas mixture.

In certain configurations, the feed pre-heater generates heat that may be used to produce low pressure steam for use in one or more additional component of the process, for example in the auto-thermal reformer step described above.

The natural gas that is heated in the pre-heater may be heated to a temperature of about 900°F or greater, about 1,000°F or greater, about 1,100°F or greater, about 1,200°F or greater, or about 1,300°F or greater. For example, from about 900°F to about 1,300°F, from about 1,000°F to about 1,250°F, from about 1,100°F to about 1,250°F, or from about 1,150°F to about 1,250°F.

The catalyst used in the auto-thermal reformer may comprise one or more catalytic materials selected from the group consisting of nickel, zinc, and copper. For example, the catalyst may comprise nickel and zinc. Preferably, the catalyst comprises nickel.

The hot syngas resulting from the ATR process is cooled in a boiler to produce steam. The steam may be optionally recycled to the inlet of the ATR to be mixed with the feed gas and the oxygen, or elsewhere in the pre-heating/pre-treatment process as required. The steam produced from the cooled syngas may also or alternatively be used for other purposes in the plant (e.g. steam turbine drivers for compressors, steam turbine generators). In certain configurations, the hot syngas may be cooled by the incoming natural gas feed, in order to reduce pre-heating needs for the incoming natural gas.

The cooled syngas (i.e. reformer product stream) is then directed to one or more water-gas shift reactors, one or more CO₂ capture steps, and one or more optional purification (e.g., PSA or methanation) steps. Each of the water-gas shift, CO₂ capture, and optional purification steps are conducted in the manner set forth above with respect to the SMR process. The impurities from the PSA and/or other purification step(s) may be recycled to the pre-heater as a fuel. Alternatively, the impurities stream originating from the PSA and/or other purification step(s) may be recycled directly to the inlet of the autothermal reformer. Purging of the impurities is usually necessary to avoid accumulation in the plant.

In certain configurations, the process may be utilized without a final purification step (e.g., without being subjected to a PSA or methanation process).

A flow diagram is set forth in Figure 6 detailing an ATR process for producing hydrogen from natural gas comprising pre-heating, pre-treatment, auto-thermal reforming, steam generation, a water-gas shift reaction, CO₂ capture, and PSA. In the configuration of Figure 6, the natural gas is directed through the pre-heater, subjected to pre-treatment (i.e. where at least a portion of the heated hydrocarbon feed stream is pre-reformed) and then through the pre-heater again to heat the pre-treated stream directly before introduction into the auto-thermal reformer. Although reference is made to the purification step of PSA, it will be understood that the process is equally applicable to processes comprising alternative purification steps such as methanation.

Similar to the discussion above with respect to an SMR process, a gas turbine may be integrated into an ATR process. Although the primary goal of the gas turbine is to produce electricity for use elsewhere in the plant or to be sold to the grid, the gas turbine hot exhaust gas can be utilized as a source of heat for the feed pre-heater and contribute to the further realization of cost savings. A typical gas turbine may be fed with and combust a hydrocarbon such as natural gas to produce electricity and release a hot exhaust gas in the atmosphere. In such an ATR process, the hot exhaust gas is then directed to the feed preheater to provide heat and thereby reduce the amount of hydrocarbons that are consumed in generating heat via a traditional feed pre-heater. A configuration of this manner is demonstrated in Figure 7. In Figure 7, the hot exhaust gas provided by the gas turbine is directed to the feed pre-heater.

In a typical ATR process, the CO₂ emissions associated with the feed preheater account for approximately 10% of the total CO₂ emissions of the ATR process, and up to 20% when the ATR is combined with an ammonia production process. Supplementing the heat required by the pre-heater with hot exhaust gas provided by an external gas turbine does not significantly reduce the CO₂ emission when the gas turbine is fed a hydrocarbon fuel source, because the gas turbine still emits CO₂. Therefore, in accordance with one aspect of the present disclosure, at least a portion of the hydrogen produced in the ATR process may be utilized to partially or fully replace the hydrocarbon fuel source of the gas turbine.

As noted above, a purely hydrogen gas feed to a turbine will result in the reaction of hydrogen with oxygen in the air when combusted to form only water as a byproduct, while simultaneously producing energy (i.e., heat). In the present disclosure, at least a portion of the hydrogen product stream of the ATR process is directed to a gas turbine. The hot exhaust gas from the gas turbine is then directed to the pre-heater as a source of heat in the ATR process. In this way, the heat required for pre-heating the ATR process is partially or fully supplied by the exhaust gas of a gas turbine that does not significantly contribute to pollution or the release of undesirable greenhouse gases such as CO₂. Further, since the hydrogen fuel may be produced in the present process with low or zero-CO₂ emissions (for example with carbon dioxide capture and storage), the power produced by the gas turbine is partially or entirely decarbonized. This design presents a significant advantage over the prior known processes by producing hydrogen from natural gas with carbon capture while simultaneously reducing the emissions associated with a typical ATR process and also generating partially or entirely decarbonized power. An example of such a configuration is shown in Figure 8. In Figure 8, a slip stream of the hydrogen product stream is directed as a feed stream to the gas turbine, wherein the hot exhaust gas of the gas turbine is directed to the feed pre-heater as a source of heat.

Additionally, the fuel to the gas turbine may be a blend of natural gas and hydrogen from the hydrogen product stream, such that the process realizes reduced emissions and produces partially decarbonized power but still allows for the majority of the hydrogen produced by the process to be recovered as a product. It will be understood that the amount of hydrogen and natural gas used in the gas turbine may be varied based on economic and/or environmental considerations. A further consideration when selecting the blend of natural gas and hydrogen from the hydrogen product stream is the technical limitations of the turbine. For example, the ability of the gas turbine combustors to burn hydrogen, the ability of the various turbine component to tolerate different combustion temperatures, etc.

The feed to the gas turbine may comprise about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol.% or greater, about 99.999 vol.% or greater, or about 100 vol.% of hydrogen. For example, the feed to the gas turbine may comprise from about 10 vol.% to about 99 vol.%, from about 15 vol.% to about 99 vol.%, from about 20 vol.% to about 99 vol.%, from about 25 vol.% to about 99 vol.%, from about 30 vol.% to about 99 vol.%, from about 35 vol.% to about 99 vol.%, from about 40 vol.% to about 99 vol.%, from about 45 vol.% to about 99 vol.%, from about 50 vol.% to about 99 vol.%, from about 55 vol.% to about 95 vol.%, from about 60 vol.% to about 90 vol.%, from about 65 vol.% to about 85 vol.%, or from about 70 vol.% to about 80 vol.% of hydrogen. In certain configurations, the feed to the gas turbine may comprise from about 10 vol.% to about 100 vol.%, from about 20 vol.% to about 100 vol.%, from about 30 vol.% to about 100 vol.%, from about 40 vol.% to about 100 vol.%, from about 30 vol.% to about 100 vol.%, from about 35 vol.% to about 100 vol.%, from about 50 vol.% to about 100 vol.%, from about 60 vol.% to about 100 vol.%, from about 70 vol.% to about 100 vol.%, from about 80 vol.% to about 100 vol.%, from about 90 vol.% to about 100 vol.%, or from about 95 vol.% to about 100 vol.% of hydrogen.

As noted above, hydrogen gas turbine technology generally requires a diluent to be added in the gas turbine combustor to reduce the temperature of the flame. The diluent may comprise steam. Therefore, the present disclosure is further directed to the use of steam produced in the ATR process (e.g., steam produced from cooling the hot reformer product stream prior to the water-gas shift reaction, steam produced in the feed pre-heater, or elsewhere in the plant) as a diluent for the hydrogen-fueled gas turbine. Generally speaking, because the ATR involves high temperature reactions, heat is readily available in the plant may be recovered to boil water in a boiler and produce steam. A boiler for the production of stream can be installed, for example, downstream of the first water-gas shift reactor, downstream of the second water-gas shift reactor (if applicable), downstream of the feed preheater, etc.

Further, the hydrogen product stream and the steam produced in the ATR may be directed to a gas turbine external of the ATR hydrogen production process. The energy generated by this gas turbine, and any resulting exhaust gas, may be used for other processes or unit operations present on-site.

In certain aspects, the hydrogen product stream may be used to produce further products such as ammonia, methanol, etc.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products and methods without departing from the scope of the invention, it is intended that all matter contained in the above description shall be interpreted as illustrative and not in a limiting sense.

The invention will now be further described with reference to the following numbered clauses:
1. A process for producing hydrogen, comprising:
   introducing heat and a source gas comprising natural gas into a steam methane reformer to produce a reformer product stream comprising hydrogen and carbon monoxide;
   subjecting the reformer product stream to a water-gas shift reaction to produce a water-gas shift product stream; the water-gas shift reaction comprising reacting the carbon monoxide with water to produce carbon dioxide and hydrogen;
   removing carbon dioxide from the water-gas shift product stream to produce a CO₂-depleted hydrogen stream; and
   subjecting the CO₂-depleted hydrogen stream to a pressure-swing adsorption process to adsorb at least a portion of the undesirable components and produce a hydrogen product stream;
   wherein at least a portion of the hydrogen product stream is directed to a hydrogen-fueled gas turbine as a source of fuel; and
   wherein the hydrogen-fueled gas turbine produces at least a portion of the heat introduced into the steam methane reformer.
2. The process of clause 1, wherein the pressure-swing adsorption process comprises contacting the CO₂-depleted stream with a zeolite adsorbent material.
3. The process of clause 1, wherein the undesirable components adsorbed in the pressure-swing adsorption process are desorbed and directed to the steam methane reformer for further processing.
4. The process of any one of clauses 1 to 3, wherein the undesirable components adsorbed from the CO₂-depleted stream are selected from the group consisting of carbon monoxide, carbon dioxide, methane, water, ammonia, and combinations thereof.
5. A process for producing hydrogen, comprising:
   introducing heat and a source gas comprising natural gas into a steam methane reformer to produce a reformer product stream comprising hydrogen and carbon monoxide;
   subjecting the reformer product stream to a water-gas shift reaction to produce a water-gas shift product stream; the water-gas shift reaction comprising reacting the carbon monoxide with water to produce carbon dioxide and hydrogen;
   removing carbon dioxide from the water-gas shift product stream to produce a CO₂-depleted hydrogen stream; and
   subjecting the CO₂-depleted hydrogen stream to a methanation process to produce a hydrogen product stream;
   wherein at least a portion of the hydrogen product stream is directed to a hydrogen-fueled gas turbine as a source of fuel; and
   wherein the hydrogen-fueled gas turbine produces at least a portion of the heat introduced into the steam methane reformer.
6. The process of clause 5, wherein the methanation process comprises contacting the CO₂-depleted hydrogen stream with a methanation catalyst.
7. The process of clause 6, wherein the methanation catalyst comprises nickel.
8. A process for producing hydrogen, comprising:
   introducing heat and a source gas comprising natural gas into a steam methane reformer to produce a reformer product stream comprising hydrogen and carbon monoxide;
   subjecting the reformer product stream to a water-gas shift reaction to produce a water-gas shift product stream; the water-gas shift reaction comprising reacting the carbon monoxide with water to produce carbon dioxide and hydrogen;
   removing carbon dioxide from the water-gas shift product stream to produce a CO₂-depleted hydrogen stream that is the hydrogen product stream;
   wherein at least a portion of the hydrogen product stream is directed to a hydrogen-fueled gas turbine as a source of fuel; and
   wherein the hydrogen-fueled gas turbine produces at least a portion of the heat introduced into the steam methane reformer.
9. The process of any one of clauses 1 to 8, wherein introducing the heat and source gas comprising natural gas into the steam methane reformer further produces a hot exhaust gas, wherein at least a portion of the hot exhaust gas is used to produce steam, and wherein at least a portion of the steam is introduced into the hydrogen-fueled gas turbine as a diluent.
10. The process of any one of clauses 1 to 9, wherein the steam methane reformer comprises a reactor having a catalyst disposed therein.
11. The process of clause 10, wherein the catalyst is selected from the group consisting of nickel, zinc, copper, and combinations thereof.
12. The process of clause 10 or 11, wherein the catalyst comprises zinc and copper.
13. The process of any one of clauses 1 to 12, wherein the water-gas shift reaction comprises contacting the reformer product stream with a catalyst.
14. The process of clause 13, wherein the water-gas shift reaction comprises cooling the reformer product stream prior to contact with the catalyst.
15. The process of clause 13 or 14, wherein the catalyst comprises a base metal.
16. The process of any one of clauses 1 to 15, wherein CO₂ is removed from the water-gas shift product stream by a process comprising absorption, adsorption, membrane separation, cryogenic separation, cryogenic distillation, or combinations thereof.
17. The process of any one of clauses 1 to 16, wherein the concentration of CO₂ in the CO₂-depleted stream is about 35 wt.% or less, about 30 wt.% or less, about 25 wt.% or less, about 20 wt.% or less, about 15 wt.% or less, about 10 wt.% or less, about 5 wt.% or less, about 4 wt.% or less, about 3 wt.% or less, about 2 wt.% or less, about 1 wt.% or less, about 0.5 wt.% or less, or about 0.25 wt.% or less.
18. The process of any one of clause 1 to 16, comprising combustion of a fuel to produce heat for introduction into the steam methane reformer, wherein at least a portion of the heat produced is used to produce steam, and wherein at least a portion of the steam is introduced into the hydrogen-fueled gas turbine as a diluent.
19. The process of any one of clauses 1 to 18, further comprising generating steam from the latent heat of the reformer product stream.
20. The process of any one of clauses 1 to 19, wherein the hydrogen product stream comprises about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol.% or greater, about 99.999 vol.% or greater, or about 100 vol.% of hydrogen.
21. The process of any one of clauses 1 to 20, wherein the fuel to the gas turbine may be a blend of natural gas and hydrogen from the hydrogen product stream and comprises about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol.% or greater, about 99.999 vol.% or greater, or about 100 vol.% of hydrogen.
22. A process for producing hydrogen, comprising:
   introducing heat and a source gas comprising natural gas into a steam methane reformer to produce a reformer product stream comprising hydrogen and carbon monoxide;
   subjecting the reformer product stream to a water-gas shift reaction to produce a water-gas shift product stream; the water-gas shift reaction comprising reacting the carbon monoxide with water to produce carbon dioxide and hydrogen;
   removing carbon dioxide from the water-gas shift product stream to produce a CO₂-depleted stream; and
   subjecting the CO₂-depleted stream to a pressure-swing adsorption process to adsorb at least a portion of the undesirable components and produce a hydrogen product stream or subjecting the CO₂-depleted hydrogen stream to a methanation process to produce a hydrogen product stream;
   wherein at least a portion of the hydrogen product stream is directed to a hydrogen-fueled gas turbine as a source of fuel; and
   wherein the reformer product stream is cooled, producing steam, and wherein at least a portion of the steam is directed to a hydrogen-fueled gas turbine as a diluent.
23. A process for producing hydrogen, comprising:
   heating a source gas comprising natural gas in a pre-heater;
   contacting the heated source gas, a source of steam, and a source of oxygen in an autothermal reformer to produce a reformer product stream comprising hydrogen and carbon monoxide;
   generating steam from the latent heat of the reformer product stream, wherein at least a portion of the source of steam introduced in the autothermal reformer comprises steam generated from the latent heat of the reformer product stream;
   subjecting the reformer product stream to a water-gas shift reaction to produce a water-gas shift product stream; the water-gas shift reaction comprising reacting the carbon monoxide with water to produce carbon dioxide and hydrogen;
   removing carbon dioxide from the water-gas shift product stream to produce a CO₂-depleted stream; and
   subjecting the CO₂-depleted stream to a pressure-swing adsorption process to adsorb at least a portion of the undesirable components and produce a hydrogen product stream or subjecting the CO₂-depleted hydrogen stream to a methanation process to produce a hydrogen product stream;
   wherein at least a portion of the hydrogen product stream is directed to a hydrogen-fueled gas turbine as a source of fuel; and
   wherein the hydrogen-fueled gas turbine produces exhaust gas that is used to heat the source gas comprising natural gas in the pre-heater.
24. The process of clause 23, wherein the natural gas is heated in the pre-heater to a temperature of about 900°F or greater, about 1,000°F or greater, about 1,100°F or greater, about 1,200°F or greater, or about 1,300°F or greater.
25. The process of clause 23, wherein at least a portion of the steam generated from the latent heat of the reformer product stream is introduced into the hydrogen-fueled gas turbine as a diluent.

## Claims

1. A process for producing hydrogen, comprising:
introducing heat and a source gas comprising natural gas into a steam methane reformer to produce a reformer product stream comprising hydrogen and carbon monoxide;
subjecting the reformer product stream to a water-gas shift reaction to produce a water-gas shift product stream; the water-gas shift reaction comprising reacting the carbon monoxide with water to produce carbon dioxide and hydrogen;
removing carbon dioxide from the water-gas shift product stream to produce a CO₂-depleted hydrogen stream; and
subjecting the CO₂-depleted hydrogen stream to a pressure-swing adsorption process to adsorb at least a portion of the undesirable components and produce a hydrogen product stream;
subjecting the CO₂-depleted hydrogen stream to a methanation process to produce a hydrogen product stream; or
utilizing the CO₂-depleted hydrogen stream as a hydrogen product stream;
wherein at least a portion of the hydrogen product stream is directed to a hydrogen-fueled gas turbine as a source of fuel; and
wherein the hydrogen-fueled gas turbine produces at least a portion of the heat introduced into the steam methane reformer.

2. The process of claim 1, wherein the CO₂-depleted hydrogen stream is subjected to a pressure-swing adsorption process and the pressure-swing adsorption process comprises contacting the CO₂-depleted hydrogen stream with a zeolite adsorbent material.

3. The process of claim 1, wherein CO₂-depleted hydrogen stream is subjected to a pressure-swing adsorption process and the undesirable components adsorbed in the pressure-swing adsorption process are desorbed and directed to the steam methane reformer for further processing.

4. The process of claim 1, wherein the CO₂-depleted hydrogen stream is subjected to a methanation process and the methanation process comprises contacting the CO₂-depleted hydrogen stream with a methanation catalyst.

5. The process of claim 4, wherein the methanation catalyst comprises nickel.

6. The process of any one of claims 1 to 5, wherein introducing the heat and source gas comprising natural gas into the steam methane reformer further produces a hot exhaust gas, wherein at least a portion of the hot exhaust gas is used to produce steam, and wherein at least a portion of the steam is introduced into the hydrogen-fueled gas turbine as a diluent.

7. The process of any one of claims 1 to 6, wherein the steam methane reformer comprises a reactor having a catalyst disposed therein, wherein the catalyst is selected from the group consisting of nickel, zinc, copper, and combinations thereof.

8. The process of any one of claims 1 to 7, wherein the water-gas shift reaction comprises contacting the reformer product stream with a catalyst comprising a base metal.

9. The process of claim 8, wherein the water-gas shift reaction comprises cooling the reformer product stream prior to contact with the catalyst.

10. The process of any one of claims 1 to 9, wherein CO₂ is removed from the water-gas shift product stream by a process comprising absorption, adsorption, membrane separation, cryogenic separation, cryogenic distillation, or combinations thereof.

11. The process of any one of claims 1 to 10, wherein the concentration of CO₂ in the CO₂-depleted hydrogen stream is about 35 wt.% or less, about 30 wt.% or less, about 25 wt.% or less, about 20 wt.% or less, about 15 wt.% or less, about 10 wt.% or less, about 5 wt.% or less, about 4 wt.% or less, about 3 wt.% or less, about 2 wt.% or less, about 1 wt.% or less, about 0.5 wt.% or less, or about 0.25 wt.% or less.

12. The process of any one of claims 1 to 11, comprising combustion of a fuel to produce heat for introduction into the steam methane reformer, wherein at least a portion of the heat produced is used to produce steam, and wherein at least a portion of the steam is introduced into the hydrogen-fueled gas turbine as a diluent.

13. The process of any one of claims 1 to 12, further comprising generating steam from the latent heat of the reformer product stream.

14. The process of any one of claims 1 to 13, wherein the hydrogen product stream comprises about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol.% or greater, about 99.999 vol.% or greater, or about 100 vol.% of hydrogen.

15. The process of any one of claims 1 to 14, wherein the fuel introduced to the hydrogen-fueled gas turbine is a blend of natural gas and hydrogen from the hydrogen product stream and comprises about 10 vol.% or greater, about 15 vol.% or greater, about 20 vol.% or greater, about 25 vol.% or greater, about 30 vol.% or greater, about 35 vol.% or greater, about 40 vol.% or greater, about 45 vol.% or greater, about 50 vol.% or greater, about 55 vol.% or greater, about 60 vol.% or greater, about 65 vol.% or greater, about 70 vol.% or greater, about 75 vol.% or greater, about 80 vol.% or greater, about 85 vol.% or greater, about 90 vol.% or greater, about 95 vol.% or greater, about 96 vol.% or greater, about 97 vol.% or greater, about 98 vol.% or greater, about 99 vol.% or greater, about 99.5 vol.% or greater, about 99.9 vol.% or greater, about 99.99 vol. % or greater, about 99.999 vol.% or greater, or about 100 vol.% of hydrogen.
